# EUROPÄISCHE PATENTANMELDUNG

(11) **EP 4 184 766 A1**
(43) Veröffentlichungstag der Anmeldung: **24.05.2023**
(21) Anmeldenummer: 22207993.1
(22) Anmeldetag: 17.11.2022
(51) Int. Cl.: H02K 15/04

(54) **VERFAHREN UND VORRICHTUNG ZUM HERSTELLEN EINER VERWEBTEN WICKELMATTE FÜR EINE SPULENWICKLUNG EINER ELEKTRISCHEN MASCHINE**

(30) Priorität: 19.11.2021 DE 102021130257
(71) Anmelder: Aumann Espelkamp GmbH, 32339 Espelkamp (DE)
(72) Erfinder: Lüttge, Wolfgang, 31787 Hameln (DE)
(74) Vertreter: Bittner, Thomas L.

(57) **Zusammenfassung**

Die Erfindung betrifft ein Verfahren und eine Vorrichtung zum Herstellen einer verwebten Wickelmatte für eine Spulenwicklung einer elektrischen Maschine, wobei das Verfahren Folgendes aufweist: Bereitstellen einer ersten Teilwickelmatte (1) mit einer ersten Wellenbiegung (3) aus Drahtmaterial, die mit ersten geraden Drahtabschnitten (3b) sowie ersten gebogenen Wicklungsköpfen (3a) gebildet ist; Bereitstellen einer zweiten Teilwickelmatte (2) mit einer zweiten Wellenbiegung (4) aus Drahtmaterial, die mit zweiten geraden Drahtabschnitten (4b) sowie zweiten gebogenen Wicklungsköpfen (4a) gebildet ist; Anordnen der ersten Teilwickelmatte (1) in einem ersten Werkzeugbauteil, wobei die ersten geraden Drahtabschnitte (3b) hierbei in ersten Klemmaufnahmen des ersten Werkzeugbauteils klemmend aufgenommen werden; Anordnen der zweiten Teilwickelmatte (2) in einem zweiten Werkzeugbauteil, wobei die zweiten geraden Drahtabschnitte (4b) hierbei in zweiten Klemmaufnahmen des zweiten Werkzeugbauteils (51) klemmend aufgenommen werden; Anordnen einer jeweiligen Nicht-Flachseite der in dem ersten und dem zweiten Werkzeugbauteil angeordneten ersten und zweiten Teilwickelmatte (1, 2) einander gegenüberliegend; Herstellen einer verwebten Wickelmatte (10) mittels Verweben der ersten und der zweiten Teilwickelmatte (1, 2), wobei hierbei das erste und das zweite Werkzeugbauteil aufeinander zugestellt und hierdurch die erste und die zweite Teilwickelmatte (1, 2) in einer zweiten Querrichtung ineinander geschoben werden, so dass die gegenüberliegenden ersten und zweiten gebogenen Wicklungsköpfe (3a, 4a) hierbei übereinanderliegend aneinander vorbeigeführt werden; und Trennen der verwebten Wickelmatte (10) von dem ersten und dem zweiten Werkzeugbauteil (50, 51).

## Beschreibung

Die Erfindung betrifft ein Verfahren und eine Vorrichtung zum Herstellen einer verwebten Wickelmatte für eine Spulenwicklung einer elektrischen Maschine.

### Hintergrund

Bei elektrischen Maschinen wird üblicherweise ein Kern mit einer Spulenwicklung aus einem Drahtmaterial versehen. Abschnitte der Spulenwicklung werden hierbei in Nuten des Kerns angeordnet. Nach einer möglichen Ausgestaltung wird für die Spulenwicklung eine Wickelmatte verwendet. Wickelmatten sind zum Beispiel als Schichtanordnung mit übereinander geschichteten Wellenbiegungen aus Drahtmaterial bekannt. Hierbei sind mehrere Wellenbiegungen aus dem Drahtmaterial übereinander geschichtet.

Im Dokument WO 2019 / 166061 A1 sind ein Verfahren und eine Vorrichtung zum Herstellen einer Wickelmatte offenbart, wobei mehrere Wellenbiegungen aus Drahtmaterial ineinander gesteckt werden. Zur Vorbereitung für das Zusammenstecken ist vorgesehen, mittels Biegen im Bereich gebogener Wicklungsköpfe der Wellenbiegung ein oder mehrere Höhenversetze auszubilden. Auf diese Weise wird erreicht, dass Wellenbiegungen, die mittels Ineinanderstecken zur Wickelmatte verarbeitet werden, in einer Ebene angeordnet sind.

Das Dokument US 2009 / 224 092 A1 beschreibt eine Webmaschine für eine Spulenbaugruppe einer rotierenden elektrischen Maschine, umfassend einen Rotations- und Antriebsabschnitt mit Zahnriemen, die Rotationsrollen veranlassen, sich um ihre Achsen unter den gleichen Stellungen zu drehen, während die Rotationsrollen gleichzeitig zu veranlassen, sich um eine Achse einer stationären Rolle zu drehen, beweglichen Elementen, die auf den Rotationsrollen platziert sind, um in X- und Y-Richtungen beweglich zu sein, Spulenzuführungsmagazinen, die derart geneigt sind, dass ein Ende von Spulendrahtsegmenten verschiebbar auf den beweglichen Elementen gestützt sind und Achsen der Spulendrahtsegmente sich auf einer Rotationsachse des Drehtisches kreuzen, ein Umlaufbahnspezifizierungselement zum Spezifizieren einer Umlaufbahn, in der die Spulenzuführungsmagazine veranlasst werden, sich in einer rechteckigen Form zu drehen, ein Rotations- und Antriebselement, um den Spulenzuführungsmagazinen zu erlauben, synchronisierte Rotationsbewegungen auszuführen, und eine Spulentransfervorrichtung, die eingerichtet ist, das Spulendrahtsegment zum Transfer zu greifen.

Auch die Dokumente EP 3 512 079 A1, DE 10 2017 104 932 A1, JP 2014-073058 A, US 2018 / 294 700 A1, DE 10 2020 105 606 A1, US 2009 / 320 275 A1, JP 2015-126629 A, US 2009 / 260 217 A1, US 2009 / 276 997 A1, US 2011 /041 318 A1, DE 11 2019 004 037T5, US 2006 / 032 040 A1, US 2009 / 260 222 A1, US 2017 / 047 830 A1, JP 2012-110105 A und DE 103 28 955 A1 beschreiben Verfahren und Vorrichtungen zum Formen von Wellenwicklungen aus ineinander gefügten Drähten. Das Dokument EP 3 544 160 A1 offenbart ein Transportsystem für Wickelmatten.

### Zusammenfassung

Aufgabe der Erfindung ist es, ein Verfahren und eine Vorrichtung zum Herstellen einer verwebten Wickelmatte für eine Spulenwicklung einer elektrischen Maschine anzugeben, mit denen die verwebte Wickelmatte auf effiziente Art und Weise herstellbar ist.

Zur Lösung sind ein Verfahren und eine Vorrichtung zum Herstellen einer verwebten Wickelmatte für eine Spulenwicklung einer elektrischen Maschine nach den unabhängigen Ansprüchen 1 und 10 geschaffen. Ausgestaltungen sind Gegenstand von abhängigen Unteransprüchen.

Nach einem Aspekt ist ein Verfahren zum Herstellen einer verwebten Wickelmatte für eine Spulenwicklung einer elektrischen Maschine geschaffen, aufweisend: Bereitstellen einer ersten Teilwickelmatte mit Wellenform, aufweisend eine erste Wellenbiegung aus Drahtmaterial, die mit ersten geraden Drahtabschnitten, die quer zu einer Längsrichtung der ersten Teilwickelmatte verlaufen, sowie mit ersten gebogenen Wicklungsköpfen gebildet ist; Bereitstellen einer zweiten Teilwickelmatte mit Wellenform, aufweisend eine zweite Wellenbiegung aus Drahtmaterial, die mit zweiten geraden Drahtabschnitten, die quer zu der Längsrichtung verlaufen, sowie mit zweiten gebogenen Wicklungsköpfen gebildet ist; Anordnen der ersten Teilwickelmatte in einem ersten Werkzeugbauteil, wobei die ersten geraden Drahtabschnitte hierbei in ersten Klemmaufnahmen des ersten Werkzeugs klemmend aufgenommen werden; Anordnen der zweiten Teilwickelmatte in einem zweiten Werkzeugbauteil, wobei die zweiten geraden Drahtabschnitte hierbei in zweiten Klemmaufnahmen des zweiten Werkzeugbauteils klemmend aufgenommen werden; Anordnen einer jeweiligen Nicht-Flachseite der in dem ersten und dem zweiten Werkzeugbauteil angeordneten ersten und zweiten Teilwickelmatte einander gegenüberliegend, derart, dass erste gebogene Wicklungsköpfe der ersten Teilwickelmatte jeweils einem der zweiten gebogenen Wicklungsköpfe der zweiten Teilwickelmatte gegenüberliegen und entlang der Längsrichtung eine versetzte Anordnung der gegenüberliegenden ersten und zweiten gebogenen Wicklungsköpfe gebildet ist, bei der der erste gebogene Wicklungskopf in Bezug auf den jeweils gegenüberliegenden zweiten gebogenen Wicklungskopf in einer ersten Querrichtung, welche auf jeweiligen Flachseiten der ersten und der zweiten Teilwickelmatte aufrechtstehend verläuft, abwechselnd höher oder tiefer angeordnet ist; Herstellen einer verwebten Wickelmatte mittels Verweben der ersten und der zweiten Teilwickelmatte, wobei hierbei das erste und das zweite Werkzeugbauteil aufeinander zugestellt und hierdurch die erste und die zweite Teilwickelmatte in einer zweiten Querrichtung, die quer zur Längsrichtung und zur ersten Querrichtung ausgebildet ist, ineinander geschoben werden, so dass die gegenüberliegenden ersten und zweiten gebogenen Wicklungsköpfe hierbei übereinanderliegend aneinander vorbeigeführt werden; und Trennen der verwebten Wickelmatte von dem ersten und dem zweiten Werkzeugbauteil.

Nach einem weiteren Aspekt ist eine Vorrichtung zum Herstellen einer verwebten Wickelmatte für eine Spulenwicklung einer elektrischen Maschine geschaffen, aufweisend: ein erstes Werkzeugbauteil, welches eingerichtet ist, eine erste Teilwickelmatte aufzunehmen, wobei die erste Teilwickelmatte mit Wellenform gebildet ist und eine erste Wellenbiegung aus Drahtmaterial aufweist, die mit ersten geraden Drahtabschnitten, die quer zur Längsrichtung der ersten Teilwickelmatte verlaufen, sowie mit ersten gebogenen Wicklungsköpfen gebildet ist; und die ersten Klemmaufnahmen eingerichtet sind, die ersten geraden Drahtabschnitte klemmend aufzunehmen; ein zweites Werkzeugbauteil, welches eingerichtet ist, eine zweite Teilwickelmatte aufzunehmen, wobei die zweite Teilwickelmatte mit Wellenform gebildet ist und eine zweite Wellenbiegung aus Drahtmaterial aufweist, die mit zweiten geraden Drahtabschnitten, die quer zur Längsrichtung der zweiten Teilwickelmatte verlaufen, sowie mit zweiten gebogenen Wicklungsköpfen gebildet ist. Das erste und das zweite Werkzeugbauteil sind weiterhin für Folgendes eingerichtet: Anordnen einer jeweiligen Nicht-Flachseite der in dem ersten und dem zweiten Werkzeugbauteil angeordneten ersten und zweiten Teilwickelmatte einander gegenüberliegend, derart, dass erste gebogene Wicklungsköpfe der ersten Teilwickelmatte jeweils einem der zweiten gebogenen Wicklungsköpfe der zweiten Teilwickelmatte gegenüberliegen und entlang der Längsrichtung eine versetzte Anordnung der gegenüberliegenden ersten und zweiten gebogenen Wicklungsköpfe gebildet ist, bei der der erste gebogene Wicklungskopf in Bezug auf den jeweils gegenüberliegenden zweiten gebogenen Wicklungskopf in einer ersten Querrichtung, welche auf jeweiligen Flachseiten der ersten und der zweiten Teilwickelmatte aufrechtstehend verläuft, abwechselnd höher oder tiefer angeordnet ist; Herstellen einer verwebten Wickelmatte mittels Verweben der ersten und der zweiten Teilwickelmatte, wobei hierbei das erste und das zweite Werkzeugbauteil aufeinander zugestellt und hierdurch die erste und die zweite Teilwickelmatte in einer zweiten Querrichtung, die quer zur Längsrichtung und zur ersten Querrichtung ausgebildet ist, ineinander geschoben werden, so dass die gegenüberliegenden ersten und zweiten gebogenen Wicklungsköpfe hierbei übereinanderliegend aneinander vorbeigeführt werden; und Trennen der verwebten Wickelmatte von dem ersten und dem zweiten Werkzeugbauteil.

Für die Herstellung der verwebten Wickelmatte ist vorgesehen, die zunächst in einem Biegeprozess an sich bekannter Art gefertigten Teilwickelmatten in einem jeweiligen Werkzeugbauteil klemmend oder haltend aufzunehmen, wobei hierbei gerade Drahtabschnitte der die Teilwickelmatte bildenden geschichteten Wellenbiegung in Klemmaufnahmen des ersten und des zweiten Werkzeugbauteils aufgenommen werden. Im geklemmten oder haltenden Zustand können sodann Drahtabschnitte der ersten und / oder der zweiten Teilwickelmatte verlagert werden, um die beiden Teilwickelmatten, welche in dem jeweiligen Werkzeugbauteil aufgenommen sind, für das anschließende Verweben der ersten und der zweiten Teilwickelmatte herzurichten. Entlang der ersten Querrichtung werden hierbei gebogene Drahtabschnitte, die gebogene Wicklungsköpfe bilden, im Vergleich zu einer Ausgangsstellung angehoben oder abgesenkt, wodurch gerade Drahtabschnitte, die in der jeweiligen Wellenbiegung an die gebogenen Wicklungsköpfe anschließen, teilweise ebenso mit verlagert werden (angehoben oder abgesenkt). Aufgrund des Mitverlagerns der an die gebogenen Wicklungsköpfe anschließenden geraden Drahtabschnitte kann die Verlagerung für die jeweiligen Drahtabschnitte in einem Ausführungsbeispiel wahlweise frei von einer Biegung zwischen dem gebogenen Wicklungskopf und den zugeordneten geraden Drahtabschnitten erfolgen.

Sodann können die erste und die zweite Teilwickelmatte miteinander verwebt werden, wobei hierbei die beiden Teilwickelmatten mittels Zustellen des ersten und des zweiten Werkzeugbauteils aufeinander zu ineinander geschoben oder gesteckt werden.

Es ist hierdurch ermöglicht, auf effiziente Art und Weise Teilwickelmatten miteinander zu verweben, die jeweils wenigstens eine Wellenbiegung (Einzeldrahtbiegung) mit geraden Drahtabschnitten und gebogenen Wicklungsköpfen aufweisen. Ohne die Notwendigkeit für ein Verflechten oder Umeinanderschlingen des Drahtmaterials der verschiedenen Wellenbiegungen, zum Beispiel in einem Wickelprozess, kann so eine verwebte Wickelmatte für eine Spulenwicklung einer elektrischen Maschine hergestellt werden. Die Wickelmatte wird also frei von Verfahrensschritten für ein Verflechten oder Umeinanderschlingen des Drahtmaterials hergestellt. Die Werkzeugbauteile mit den Klemmaufnahmen ermöglichen es hierbei, die zuvor hergestellten Teilwickelmatten einerseits für das Verweben zu positionieren und andererseits die gebogenen Drahtabschnitte mit den Wicklungsköpfen in der Höhe relativ zueinander zu verlagern und in dieser Stellung zu halten, sei es mittels Klemmwirkung und / oder aufgrund einer nicht elastischen Biegung.

Die verwebte Wickelmatte kann mittels eines Planierwerkzeugs planiert werden, wobei die verwebte Wickelmatte hierbei auf gegenüberliegenden Flachseiten mit Druck beaufschlagt wird. Die Druckbeaufschlagung auf den gegenüberliegenden Flachseiten kann ein oder beidseitig eine flächige Druckbeaufschlagung umfassen, sei es über die gesamte Fläche oder eine Teilfläche der verwebten Wickelmatte.

Die verwebte Wickelmatte kann mittels des Planierwerkzeugs planiert werden, wenn die verwebte Wickelmatte noch zumindest an dem ersten oder dem zweiten Werkzeugbauteil angeordnet ist.

Die verwebte Wickelmatte kann mittels des Planierwerkzeugs nach dem Trennen von dem ersten und dem zweiten Werkzeugbauteil planiert werden.

Bei dem Verfahren kann weiterhin zumindest einer der folgenden Schritte vorgesehen sein: Die ersten geraden Drahtabschnitte werden bei dem ersten Werkzeugbauteil in einem ersten Kammwerkzeug angeordnet, welches mit den ersten Klemmaufnahmen gebildet ist, wobei benachbarte erste Klemmaufnahmen mittels erster Kammelementen voneinander getrennt sind; und die zweiten geraden Drahtabschnitte werden bei dem zweiten Werkzeugbauteil in einem zweiten Kammwerkzeug angeordnet, welches mit den zweiten Klemmaufnahmen gebildet ist, wobei benachbarte zweite Klemmaufnahmen mittels zweiter Kammelementen voneinander getrennt sind. Die Kammwerkzeuge können sich bei den Werkzeugbauteilen mit der Anordnung von Klemmaufnahmen in Längsrichtung erstrecken und so eine Folge von nebeneinanderliegenden Klemmaufnahmen bereitstellen, wobei benachbarte Klemmaufnahmen mittels Kammelementen oder Trennwänden / -stegen voneinander getrennt sind.

Bei dieser oder anderen Ausführungsbeispielen kann nach dem Anordnen der ersten und der zweiten Teilwickelmatte an dem ersten und dem zweiten Werkzeugbauteil pro Klemmaufnahme genau ein gerader Drahtabschnitt der Wellenbiegungen aufgenommen sein. Alternativ kann vorgesehen sein, dass mehrere gerade Drahtabschnitte in ein und derselben Klemmaufnahme angeordnet sind.

Zum Ausbilden der versetzte Anordnung der gegenüberliegenden ersten und zweiten gebogenen Wicklungsköpfe können verlagerbare Werkzeugteile des ersten und / oder des zweiten Werkzeugbauteils mit den hierin angeordneten gebogenen Wicklungsköpfen gegenüber einem jeweils zugeordneten Basisbauteil verlagert werden. Verlagerungsbauteile und zugeordnetes Basisbauteil sind jeweils Teil des ersten oder des zweiten Werkzeugbauteils. Mittels Verlagern der Verlagerungsbauteil wird für die einander gegenüberliegenden Teilwickelmatten die versetzte Anordnung der gegenüberliegenden ersten und zweiten gebogenen Wicklungsköpfe ausgebildet. Hierbei kann vorgesehen sein, dass die am Verlagerungsbauteil in den Klemmaufnahmen angeordneten Drahtabschnitte beim Verlagern ihre Relativlage zum Verlagerungsbauteil nicht ändern, beispielsweise aufgrund einer (weiteren) Biegung des Drahtmaterials.

Die Verlagerungsbauteile können gegenüber dem jeweils zugeordneten Basisbauteil verschwenkt werden.

Die ersten und die zweiten gebogenen Wicklungsköpfe sowie jeweils zugeordnete erste und zweite gerade Drahtabschnitte beim Ausbilden der versetzten Anordnung der gegenüberliegenden ersten und zweiten gebogenen Wicklungsköpfe können in einer alternativen Ausführung ihre jeweilige Relativlage zur zugeordneten Klemmaufnahme ändern. Bei dieser Ausführungsform werden die Drahtabschnitte in der zugeordneten Klemmaufnahme verlagert, so dass sich die Relativlage zwischen Klemmaufnahme und hierin aufgenommenem Drahtabschnitt ändert. Zur Verlagerung ist die von der Klemmaufnahme ausgebildete Klemmkraft zu überwinden.

Beim Ausbilden der versetzten Anordnung der gegenüberliegenden ersten und zweiten gebogenen Wicklungsköpfe kann in den verschiedenen Ausführungsformen beispielsweise ein Greif- oder Hebelwerkzeug verwendet werden, welches mit dem zu verlagernden gebogenen Drahtabschnitt in Kontakt tritt, um dieses zu verlagern, beispielsweise mittels Drücken und / oder Ziehen.

Beim Ausbilden der versetzten Anordnung der gegenüberliegenden ersten und zweiten gebogenen Wicklungsköpfe können mittels eines zugeordneten Rückhaltwerkzeug verbleibende erste und der zweite gebogene Wicklungsköpfe sowie jeweils zugeordnete erste und zweite gerade Drahtabschnitte gegen eine Verlagerung gesichert werden. Auf diese Weise können insbesondere die verbleibenden gebogenen Wicklungsköpfe in ihrer Stellung oder Lage gehalten werden, um die gewünschte unterschiedliche Höhenlage der einander gegenüberliegenden Wicklungsköpfe vor dem Ineinanderstecken der beiden Teilwickelmatten auszubilden.

Bei dem Verfahren kann Folgendes vorgesehen sein: Bereitstellen der ersten Teilwickelmatte mit einer ersten Schichtanordnung mit übereinander geschichteter erster Wellenbiegungen aus Drahtmaterial, wobei die ersten Wellenbiegungen jeweils mit ersten geraden Drahtabschnitten, die quer zu einer Längsrichtung der ersten Teilwickelmatte verlaufen, sowie mit ersten gebogenen Wicklungsköpfen gebildet und in Längsrichtung zueinander versetzt angeordnet sind; und / oder Bereitstellen der zweiten Teilwickelmatte mit einer zweiten Schichtanordnung mit übereinander geschichteten zweiten Wellenbiegungen aus Drahtmaterial, wobei die zweiten Wellenbiegungen jeweils mit zweiten geraden Drahtabschnitten, die quer zu der Längsrichtung verlaufen, sowie mit zweiten gebogenen Wicklungsköpfen gebildet und in Längsrichtung versetzt zueinander angeordnet sind. Bei dieser Ausgestaltung weist zumindest eine der beiden Teilwickelmatten selbst bereits mehr als eine Wellenbiegung auf. Die mehreren Wellenbiegungen können in Längsrichtung zueinander versetzt angeordnet sein. Alternativ oder ergänzend kann vorgesehen sein, dass die mehreren Wellenbiegung miteinander verwebt sind, also zum Beispiel ineinandergesteckt sind.

Die vorangehend in Verbindung mit dem Verfahren erläuterten Ausgestaltungen können im Zusammenhang mit der Vorrichtung zum Herstellen der verwebten Wickelmatten für die Spulenwicklung einer elektrischen Maschine entsprechend vorgesehen sein.

Für die Nutzungseigenschaften einer elektrischen Maschine kann es vorteilhaft sein, wenn Drahtlagen der Spulenwicklung in den Nuten des Kerns getauscht oder vermischt sind. Das beschriebene Verfahren ermöglicht ein solches Vermischen oder Tauschen von Drahtabschnitten innerhalb der Wicklung.

### Beschreibung von Ausführungsbeispielen

Im Folgenden werden weitere Ausführungsbeispiele unter Bezugnahme auf Figuren einer Zeichnung erläutert. Hierbei zeigen:
- Fig. 1: eine schematische Darstellung für eine erste und eine zweite Teilwickelmatte mit Wellenform, in welcher jeweils mehrere Wellenbiegungen aus Drahtmaterial übereinander geschichtet und in Längsrichtung versetzt zueinander angeordnet sind;
- Fig. 2: eine schematische Darstellung der Anordnung aus Fig. 1, wobei zur Vorbereitung eines Verwebens der ersten und der zweiten Teilwickelmatte einander gegenüberliegende gebogene Wicklungsköpfe hinsichtlich ihrer Relativlage zueinander verlagert werden;
- Fig. 3: eine schematische Darstellung der Anordnung aus Fig. 2, wobei die erste und die zweite Teilwickelmatte teilweise miteinander verwebt sind;
- Fig. 4: eine schematische Darstellung einer verwebten Wickelmatte für eine Spulenwicklung einer elektrischen Maschine, wobei im Unterschied zu Fig. 3 die erste und die zweite Teilwickelmatte vollständig miteinander verwebt sind;
- Fig. 5: eine schematische Darstellung einer ersten und einer zweiten Teilwickelmatte, die jeweils getrennt von einem ersten und einem zweiten Werkzeugbauteil angeordnet sind, von oben und im Schnitt;
- Fig. 6: eine schematische Darstellung der Anordnung aus Fig. 5, wobei die erste und die zweite Teilwickelmatte mit geraden Drahtabschnitten in Klemmaufnahmen des ersten und des zweiten Werkzeugbauteils angeordnet sind;
- Fig. 7: eine schematische Darstellung der Anordnung aus Fig. 6, wobei für die erste und die zweite Teilwickelmatte einander gegenüberliegende gebogene Wicklungsköpfe aufgespreizt werden;
- Fig. 8: eine weitere schematische Darstellung der Anordnung aus Fig. 7;
- Fig. 9: eine schematische Darstellung der Anordnung aus Fig. 8, wobei die erste und die zweite Teilwickelmatte mittels Zustellen des ersten und des zweiten Werkzeugbauteils aufeinander zu miteinander verwebt werden;
- Fig. 10: eine schematische Darstellung der Anordnung aus Fig. 9, wobei die erste und die zweite Teilwickelmatte mittels Zustellen des ersten und des zweiten Werkzeugbauteils aufeinander zu miteinander verwebt sind;
- Fig. 11: eine weitere schematische Darstellung der Anordnung aus Fig. 10;
- Fig. 12: eine schematische Darstellung der Anordnung aus Fig. 11, wobei die verwebte Wickelmatte in die Klemmaufnahmen des ersten Werkzeugbauteils verlagert ist;
- Fig. 13: eine schematische Darstellung der Anordnung aus Fig. 12, wobei das erste Werkzeugbauteil gegenüber dem zweiten Werkzeugbauteil zurückgestellt ist; und
- Fig. 14: eine schematische Darstellung der Anordnung aus Fig. 13, wobei die verwebte Wickelmatte von dem ersten und dem zweiten Bauteil getrennt ist.

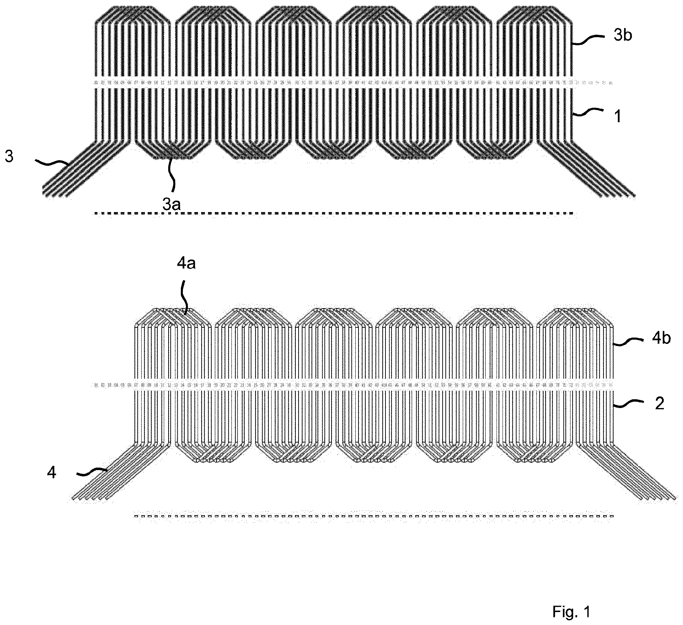

Fig. 1 bis 4 zeigen schematische Darstellungen einer Anordnung mit einer ersten und einer zweiten Teilwickelmatte 1, 2. Bei der ersten Teilwickelmatte 1 sind sechs erste Wellenbiegungen 3 aus Drahtmaterial geschichtet übereinander angeordnet und in einer Längsrichtung versetzt zueinander, so dass Gruppen erster gebogener Wicklungsköpfe 3a der ersten Wellenbiegungen 3 für die Wellenform der ersten Teilwickelmatte 1 zugeordnete Wellenberge und Wellentäler ausgebildet sind. Zwischen den ersten gebogenen Wicklungsköpfen 3a verlaufen erste gerade Drahtabschnitte 3b, die gemäß der Darstellung in Fig. 1 in Längsrichtung der ersten Teilwickelmatte 1 äquidistant beabstandet sind.

Vergleichbar sind bei der zweiten Teilwickelmatte 2 sechs zweite Wellenbiegungen 4 aus Drahtmaterial übereinandergeschichtet und in Längsrichtung versetzt zueinander angeordnet, so dass Gruppen zweiter gebogener Wicklungsköpfe 4a der zweiten Wellenbiegungen 4 für die Wellenform der zweiten Teilwickelmatte 2 zugeordnete Wellenberge und Wellentäler ausgebildet sind. Die zweiten gebogenen Wicklungsköpfen 4a sind verbunden mit zweiten geraden Drahtabschnitten 4b. Die Anzahl von gebogenen Wicklungsköpfen in einem Wellenberg / -tal der Teilwickelmatte entspricht hierbei der Anzahl der geschichteten Wellenbiegungen.

Die ersten und die zweiten Wellenbiegungen 3, 4 sind vorher mittels eines jeweiligen Biegeprozesses aus dem Drahtmaterial hergestellt. Verschiedene Verfahren zum Herstellen solcher Wellenbiegungen sind als solche bekannt.

Gemäß der Darstellung in Fig. 1 liegen sich Nicht-Flachseiten der ersten und der zweiten Teilwickelmatte 1, 2 einander gegenüber, derart, dass ersten gebogenen Wicklungsköpfen 3a der ersten Teilwickelmatte 1 zugeordnete zweite gebogenen Wicklungsköpfen 4a der zweiten Teilwickelmatte 2 gegenüberliegen.

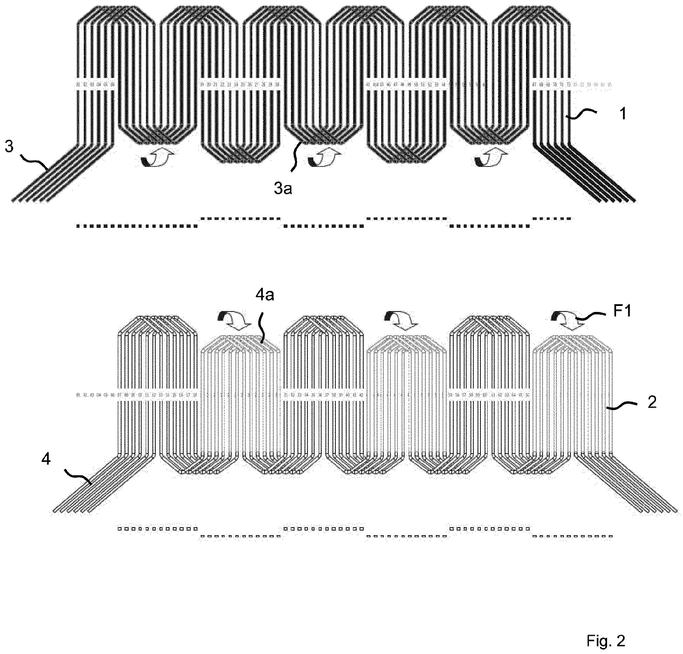

Um die erste und die zweite Teilwickelmatte 1, 2 für ein Verweben miteinander vorzubereiten, ist gemäß Fig. 2 vorgesehen, bei der ersten und bei der zweiten Teilwickelmatte 1, 2 abwechselnd erste und zweite gebogene Wicklungsköpfe 3a, 4a in einer ersten Querrichtung zu verlagern, die quer zur Längsrichtung der ersten und der zweiten Teilwickelmatte 1, 2 verläuft und auf den Flachseiten der ersten und der zweiten Teilwickelmatte 1, 2 (Zeichenebene) aufrechtsteht, insbesondere mittels Aufwärts- oder Abwärtsbiegen, was in Fig. 2 mittels Pfeilen F1 schematisch gezeigt ist. Auf diese Weise sind einander gegenüberliegende (Gruppen von) erste(n) und zweite(n) gebogene(n) Wicklungsköpfe(n) 3a, 4a entlang der ersten Querrichtung in unterschiedlicher Höhe angeordnet, wobei abwechselnd erste und zweite gebogene Wicklungsköpfe 3a, 4a höher als die gebogenen Wicklungsköpfe 4a, 3a der anderen Teilwickelmatte angeordnet sind.

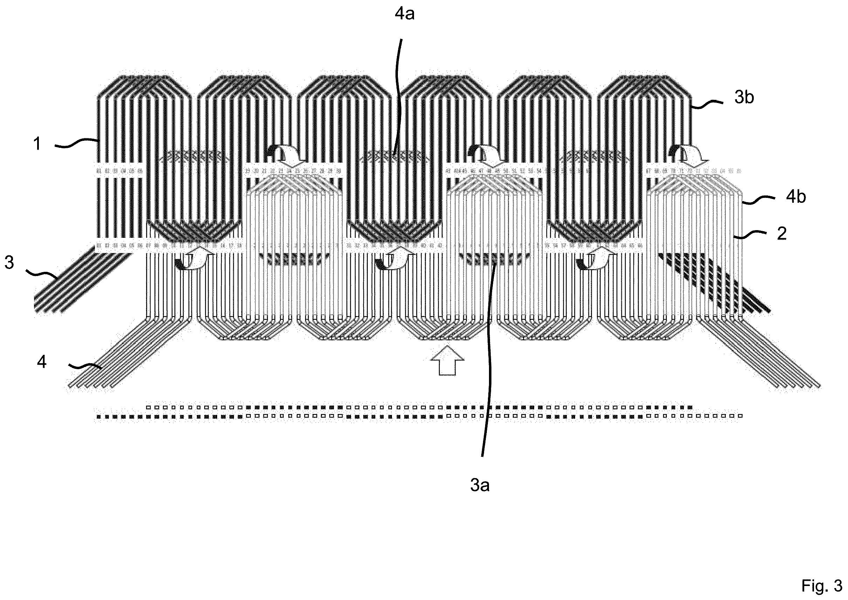

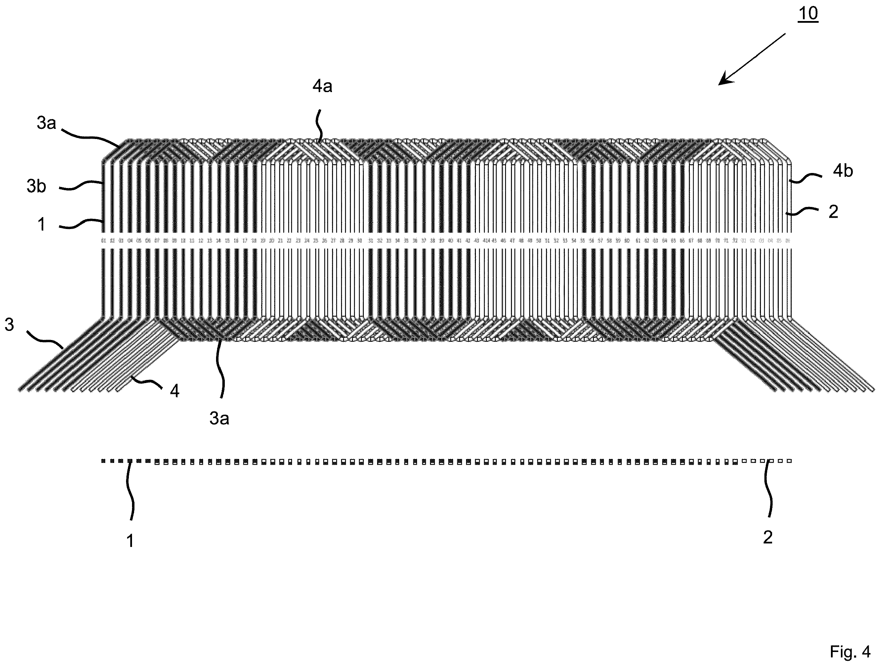

Die so gemäß Fig. 2 ausgebildete Anordnung versetzter gebogener Wicklungsköpfe ermöglicht es dann die erste und die zweite Teilwickelmatte 1, 2 gemäß Fig. 3 miteinander zu verweben, wobei hierbei die erste und die zweite Teilwickelmatte 1, 2 ineinandergesteckt oder - geschoben werden. Hierbei werden die in unterschiedlicher Höhe einander gegenüberliegenden Wicklungsköpfe übereinanderliegend aneinander vorbeigeführt. Es entsteht eine verwebte Wickelmatte 20, wie dies in Fig. 4 gezeigt ist, wobei hierbei die zunächst gemäß Fig. 3 hergestellte verwebte Anordnung zusätzlich planiert ist, beispielsweise dadurch, dass die gemäß Fig. 3 hergestellte Anordnung auf den gegenüberliegenden Flachseiten jeweils mit flächigem Druck beaufschlagt wird.

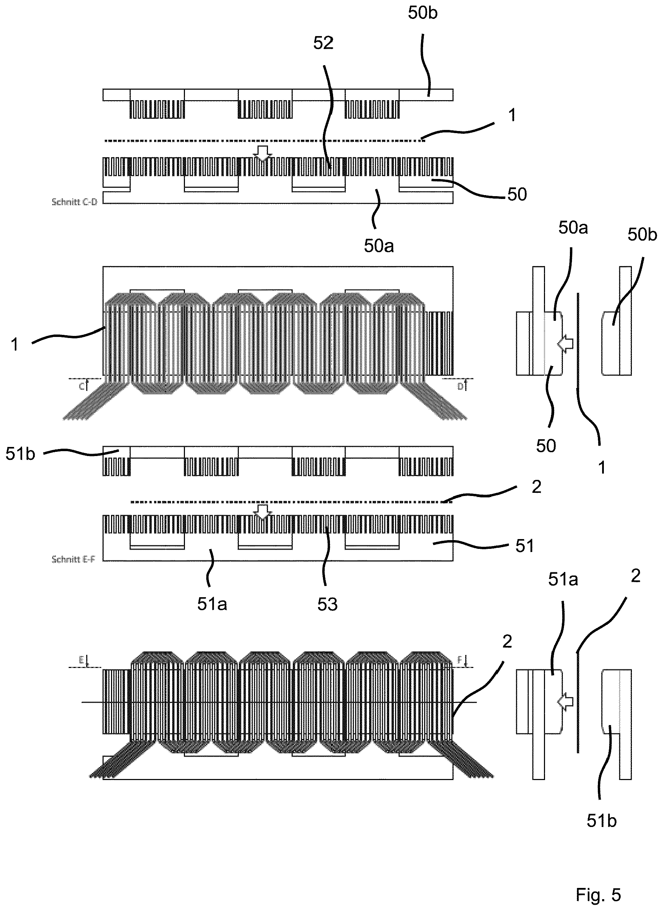

Unter Bezugnahme auf die Fig. 5 bis 14 wird der in den Fig. 1 bis 4 schematische gezeigte Prozess des Herstellens der verwebten Wickelmatte 10 anhand von weiteren Ausführungsbeispielen weiter im Detail erläutert. Für gleiche Merkmale werden dieselben Bezugszeichen wie in den Fig. 1 bis 4 verwendet.

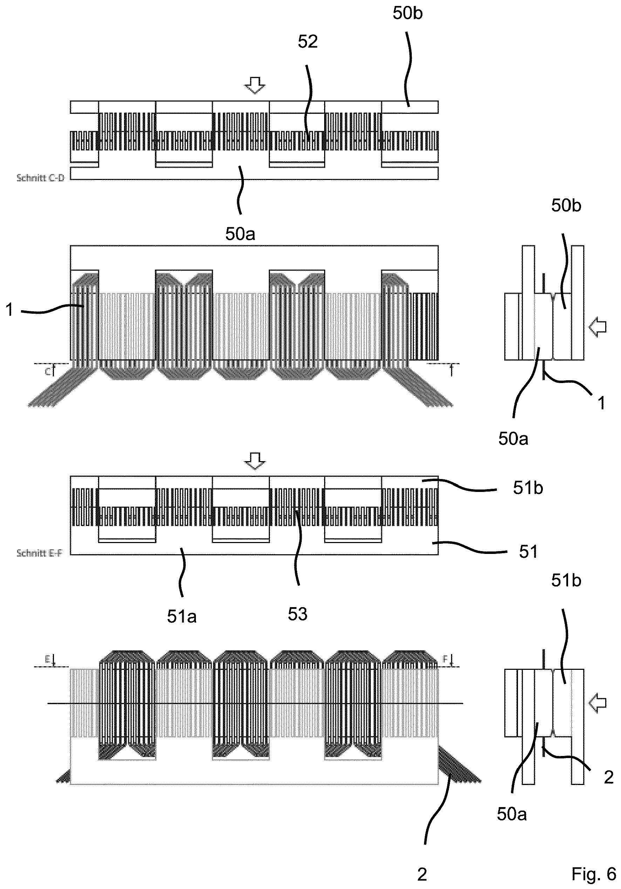

Gemäß Fig. 5 und 6 werden für die erste und die zweite Teilwickelmatte 1, 2 ein erstes und ein zweites Werkzeugbauteil 50, 51 mit jeweiligen Klemmaufnahmen 52, 53 bereitgestellt, um die geraden Drahtabschnitte 3b, 4b in den Klemmaufnahmen 52, 53 klemmend aufzunehmen. In den Fig. 5 und 6 ist die jeweilige Anordnung mit Teilwickelmatte und Werkzeugbauteil jeweils von vorn, von oben und von der Seite dargestellt.

Das erste und das zweite Werkzeugbauteil 50, 51 weisen jeweils ein Bodenbauteil 50a, 50b sowie ein Deckbauteil 50b, 51b auf. Diese sind gemäß Fig. 6 aufeinander angeordnet, und die erste und die zweite Teilwickelmatte 1, 2 sind in den Klemmaufnahmen 52, 53 aufgenommen.

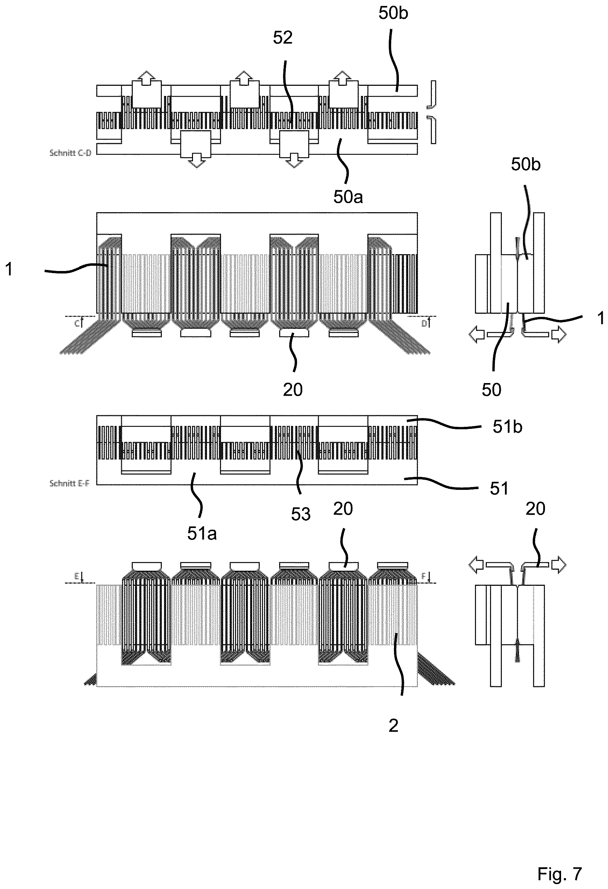

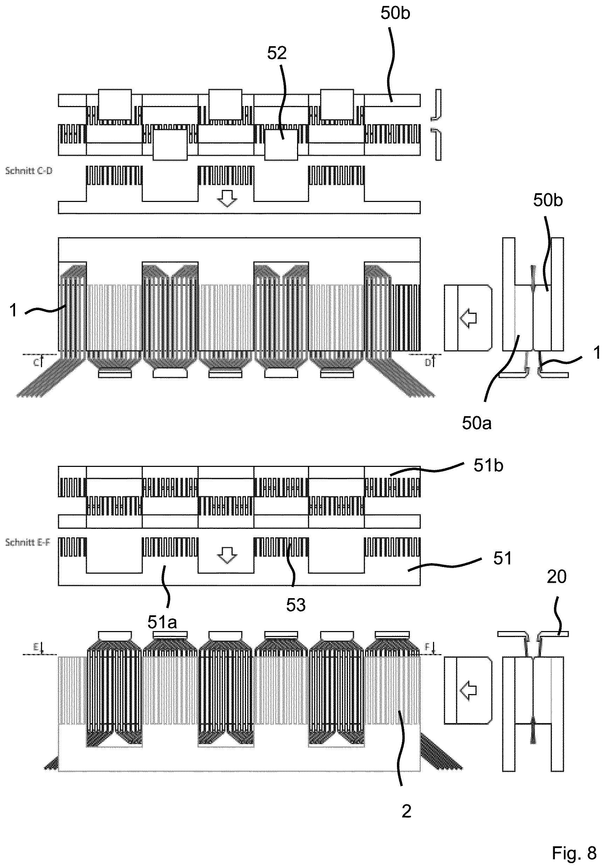

Sodann werden die erste und die zweite Teilwickelmatte 1, 2 für das Verweben miteinander gemäß den Fig. 7 und 8 vorbereitet. Dies entspricht dem Aufspreizen (Ausbilden der versetzten Anordnung der gegenüberliegenden Wicklungsköpfe), wie oben insbesondere unter Bezugnahme auf Fig. 2 erläutert.

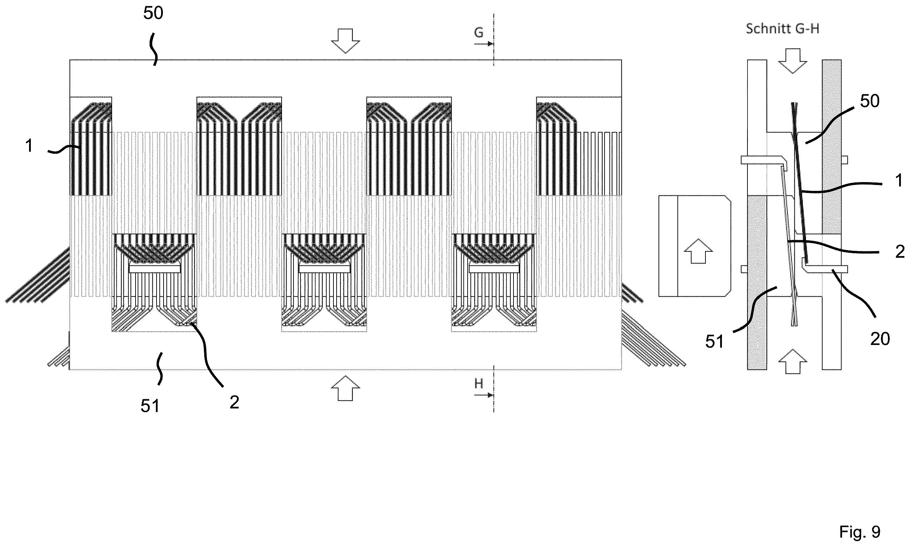

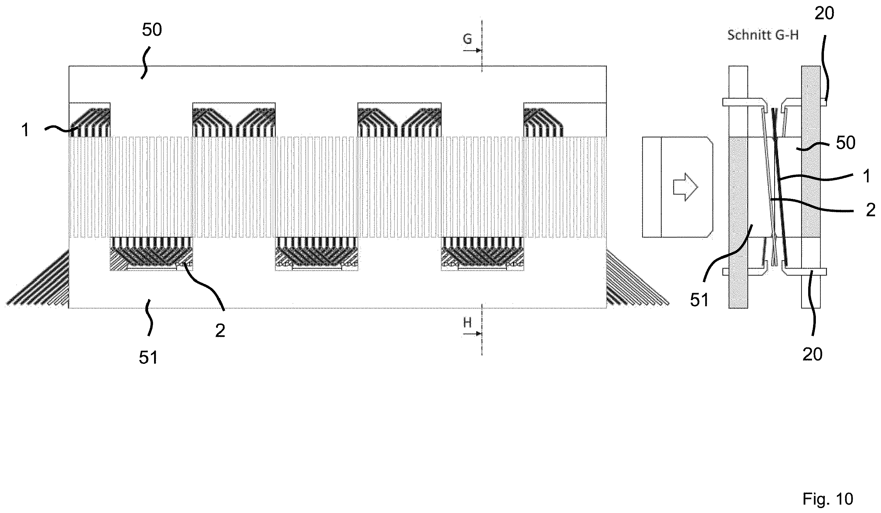

Anschließend können die erste und die zweite Teilwickelmatte 1, 2 miteinander verwebt werden, indem das erste und das zweite Werkzeugbauteil 50, 51 aufeinander zugestellt werden, wie dies die Fig. 9 und 10 zeigen.

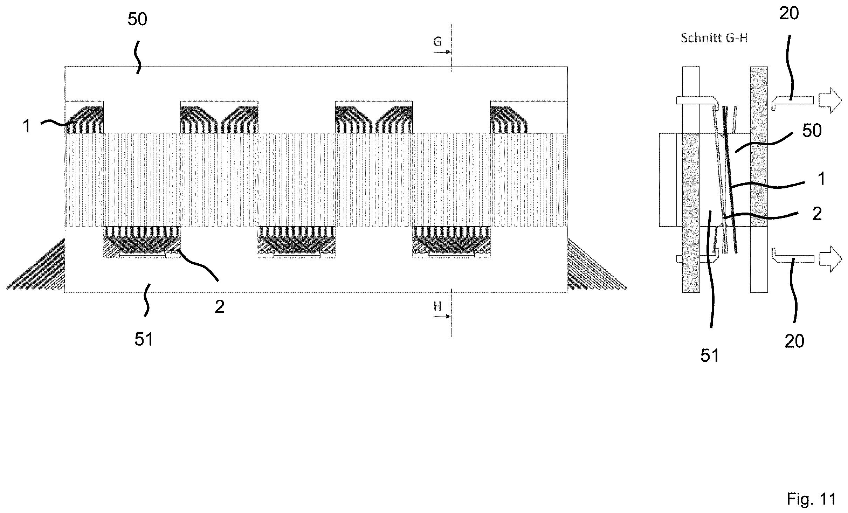

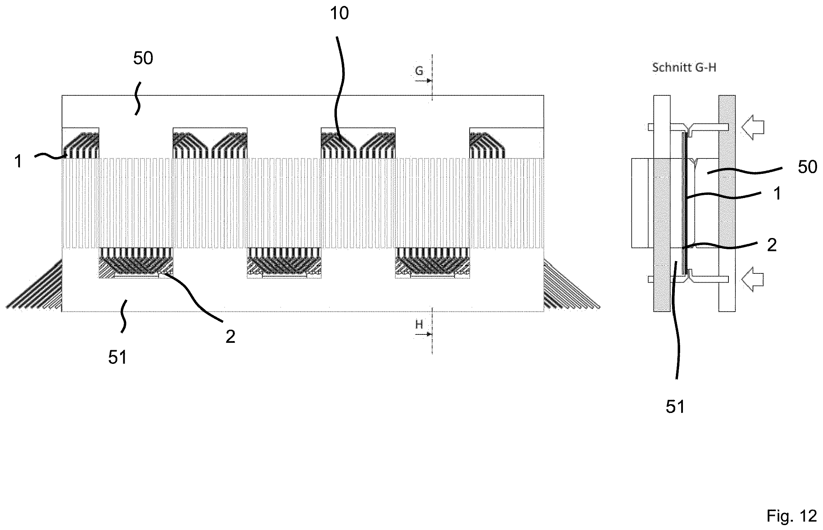

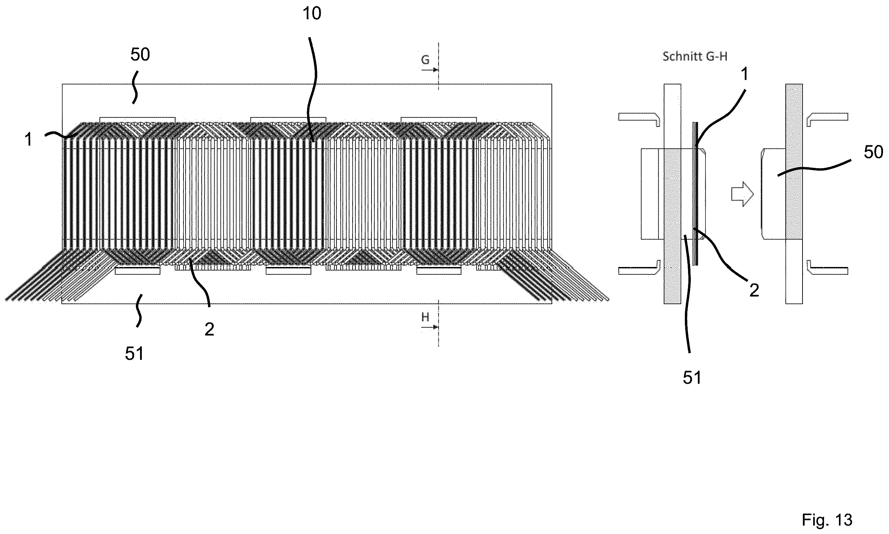

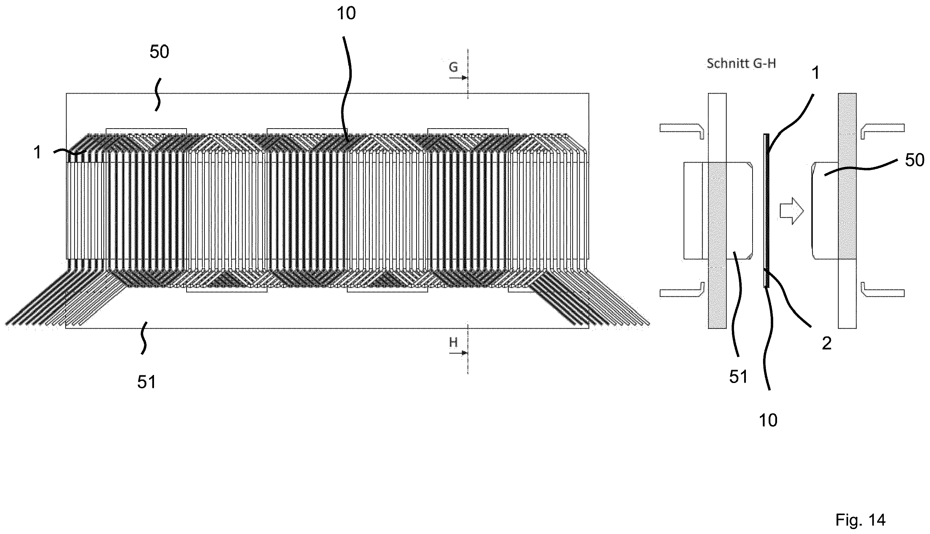

Nach Abschluss des Ineinandersteckens der ersten und der zweiten Teilwickelmatte 1, 2 (vgl. Fig. 11) wird die so hergestellte verwebte Anordnung der beiden Teilwickelmatten 1, 2 dann gemäß Fig. 12 mittels Werkezugelementen 20 in das zweite Werkzeugbauteil 51 verlagert, sei es mittels Drücken und / oder Ziehen, um dann die verwebte Wickelmatte 10 gemäß Fig. 14 von dem ersten und dem zweiten Werkzeugbauteil 50, 51 zu trennen, nachdem zuvor gemäß Fig. 13 das zweite Werkzeugbauteil 51 zurückgefahren wurde. Die schematischen Darstellungen in den Fig. 11 ff. zeigen die Anordnung mit dem ersten und der zweiten Werkzeugbauteil jeweils von oben und im Schnitt.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Verfahren zum Herstellen einer verwebten Wickelmatte für eine Spulenwicklung einer elektrischen Maschine, aufweisend:
- Bereitstellen einer ersten Teilwickelmatte (1) mit Wellenform, aufweisend eine erste Wellenbiegung (3) aus Drahtmaterial, die mit ersten geraden Drahtabschnitten (3b), die quer zu einer Längsrichtung der ersten Teilwickelmatte (1) verlaufen, sowie mit ersten gebogenen Wicklungsköpfen (3a) gebildet ist;
- Bereitstellen einer zweiten Teilwickelmatte (2) mit Wellenform, aufweisend eine zweite Wellenbiegung (4) aus Drahtmaterial, die mit zweiten geraden Drahtabschnitten (4b), die quer zu der Längsrichtung verlaufen, sowie mit zweiten gebogenen Wicklungsköpfen (4a) gebildet ist;
- Anordnen der ersten Teilwickelmatte (1) in einem ersten Werkzeugbauteil (50), wobei die ersten geraden Drahtabschnitte (3b) hierbei in ersten Klemmaufnahmen (52) des ersten Werkzeugbauteils (50) klemmend aufgenommen werden;
- Anordnen der zweiten Teilwickelmatte (2) in einem zweiten Werkzeugbauteil (51), wobei die zweiten geraden Drahtabschnitte (4b) hierbei in zweiten Klemmaufnahmen (53) des zweiten Werkzeugbauteils (51) klemmend aufgenommen werden;
- Anordnen einer jeweiligen Nicht-Flachseite der in dem ersten und dem zweiten Werkzeugbauteil (50, 51) angeordneten ersten und zweiten Teilwickelmatte (1, 2) einander gegenüberliegend, derart, dass
- erste gebogene Wicklungsköpfe (3a) der ersten Teilwickelmatte (1) jeweils einem der zweiten gebogenen Wicklungsköpfe (4a) der zweiten Teilwickelmatte (2) gegenüberliegen und
- entlang der Längsrichtung eine versetzte Anordnung der gegenüberliegenden ersten und zweiten gebogenen Wicklungsköpfe gebildet ist, bei der der erste gebogene Wicklungskopf (3a) in Bezug auf den jeweils gegenüberliegenden zweiten gebogenen Wicklungskopf (4a) in einer ersten Querrichtung, welche auf jeweiligen Flachseiten der ersten und der zweiten Teilwickelmatte (1, 2) aufrechtstehend verläuft, abwechselnd höher oder tiefer angeordnet ist;
- Herstellen einer verwebten Wickelmatte (10) mittels Verweben der ersten und der zweiten Teilwickelmatte (1, 2), wobei hierbei das erste und das zweite Werkzeugbauteil (50, 51) aufeinander zugestellt und hierdurch die erste und die zweite Teilwickelmatte (1, 2) in einer zweiten Querrichtung, die quer zur Längsrichtung und zur ersten Querrichtung ausgebildet ist, ineinander geschoben werden, so dass die gegenüberliegenden ersten und zweiten gebogenen Wicklungsköpfe (3a, 4a) hierbei übereinanderliegend aneinander vorbeigeführt werden; und
- Trennen der verwebten Wickelmatte (10) von dem ersten und dem zweiten Werkzeugbauteil (50, 51).

2. Verfahren nach Anspruch 1, **dadurch gekennzeichnet, dass** die verwebte Wickelmatte (10) mittels eines Planierwerkzeugs planiert wird, wobei die verwebte Wickelmatte (10) hierbei auf gegenüberliegenden Flachseiten mit Druck beaufschlagt wird.

3. Verfahren nach Anspruch 2, **dadurch gekennzeichnet, dass** die verwebte Wickelmatte (10) mittels des Planierwerkzeugs planiert wird, wenn die verwebte Wickelmatte (10) noch zumindest an dem ersten oder dem zweiten Werkzeugbauteil (50, 51) angeordnet ist.

4. Verfahren nach Anspruch 2 oder 3, **dadurch gekennzeichnet, dass** die verwebte Wickelmatte (10) mittels des Planierwerkzeugs nach dem Trennen von dem ersten und dem zweiten Werkzeugbauteil (50, 51) planiert wird.

5. Verfahren nach mindestens einem der vorangehenden Ansprüche, **dadurch gekennzeichnet, dass** zumindest einer der folgenden Schritte vorgesehen ist:
- die ersten geraden Drahtabschnitte (3b) werden bei dem ersten Werkzeugbauteil (50) in einem ersten Kammwerkzeug angeordnet, welches mit den ersten Klemmaufnahmen (52) gebildet ist, wobei benachbarte erste Klemmaufnahmen (52) mittels erster Kammelementen voneinander getrennt sind; und
- die zweiten geraden Drahtabschnitte (4b) werden bei dem zweiten Werkzeugbauteil (51) in einem zweiten Kammwerkzeug angeordnet, welches mit den zweiten Klemmaufnahmen (53) gebildet ist, wobei benachbarte zweite Klemmaufnahmen (53) mittels zweiter Kammelementen voneinander getrennt sind.

6. Verfahren nach mindestens einem der vorangehenden Ansprüche, **dadurch gekennzeichnet, dass** zum Ausbilden der versetzte Anordnung der gegenüberliegenden ersten und zweiten gebogenen Wicklungsköpfe (3a, 4a) verlagerbare Werkzeugteile (50a, 51a) des ersten und / oder das zweiten Werkzeugbauteils (50, 51) mit den hierin angeordneten gebogenen Wicklungsköpfen gegenüber einem jeweils zugeordneten Basisbauteil (50b, 51b) verlagert werden.

7. Verfahren nach Anspruch 6, **dadurch gekennzeichnet, dass** die verlagerbaren Werkzeugteile (50a, 51a) gegenüber dem jeweils zugeordneten Basisbauteil (50b, 51b) verschwenkt werden.

8. Verfahren nach mindestens einem der vorangehenden Ansprüche, **dadurch gekennzeichnet, dass** die ersten und die zweiten gebogenen Wicklungsköpfe (3a, 4a) sowie jeweils zugeordnete erste und zweite gerade Drahtabschnitte beim Ausbilden der versetzten Anordnung der gegenüberliegenden ersten und zweiten gebogenen Wicklungsköpfe (3a, 4a) ihre jeweilige Relativlage zur zugeordneten Klemmaufnahme (52, 53) ändern.

9. Verfahren nach mindestens einem der vorangehenden Ansprüche, **dadurch gekennzeichnet, dass** beim Ausbilden der versetzten Anordnung der gegenüberliegenden ersten und zweiten gebogenen Wicklungsköpfe (3a, 4a) mittels eines zugeordneten Rückhaltwerkzeug verbleibende erste und der zweite gebogene Wicklungsköpfe sowie jeweils zugeordnete erste und zweite gerade Drahtabschnitte gegen eine Verlagerung gesichert werden.

10. Verfahren nach mindestens einem der vorangehenden Ansprüche, **gekennzeichnet durch**
- Bereitstellen der ersten Teilwickelmatte (1) mit einer ersten Schichtanordnung mit übereinander geschichteter erster Wellenbiegung (3) aus Drahtmaterial, wobei die ersten Wellenbiegungen (3) jeweils mit ersten geraden Drahtabschnitten (3b), die quer zu einer Längsrichtung der ersten Teilwickelmatte (1) verlaufen, sowie mit ersten gebogenen Wicklungsköpfen (3a) gebildet sind; und / oder
- Bereitstellen der zweiten Teilwickelmatte (2) mit einer zweiten Schichtanordnung mit übereinander geschichteten zweiten Wellenbiegungen (4) aus Drahtmaterial, wobei die zweiten Wellenbiegungen (4) jeweils mit zweiten geraden Drahtabschnitten (4b), die quer zu der Längsrichtung verlaufen, sowie mit zweiten gebogenen Wicklungsköpfen (4a) gebildet sind.

11. Vorrichtung zum Herstellen einer verwebten Wickelmatte für eine Spulenwicklung einer elektrischen Maschine, aufweisend:
- ein erstes Werkzeugbauteil (50), welches eingereicht ist, eine erste Teilwickelmatte (1) aufzunehmen, wobei
- die erste Teilwickelmatte (1) mit Wellenform gebildet ist und eine erste Wellenbiegung (3) aus Drahtmaterial aufweist, die mit ersten geraden Drahtabschnitten, die quer zur Längsrichtung der ersten Teilwickelmatte (1) verlaufen, sowie mit ersten gebogenen Wicklungsköpfen gebildet ist; und
- die ersten Klemmaufnahmen eingerichtet sind, die ersten geraden Drahtabschnitte klemmend aufzunehmen;
- ein zweites Werkzeugbauteil (51), welches eingereicht ist, eine zweite Teilwickelmatte (2) aufzunehmen, wobei
- die zweite Teilwickelmatte (2) mit Wellenform gebildet ist und eine zweite Wellenbiegung (4) aus Drahtmaterial aufweist, die mit zweiten geraden Drahtabschnitten, die quer zur Längsrichtung der zweiten Teilwickelmatte (2) verlaufen, sowie mit zweiten gebogenen Wicklungsköpfen gebildet ist;
wobei das erste und das zweite Werkzeugbauteil (50, 51) weiterhin für Folgendes eingerichtet sind:
- Anordnen einer jeweiligen Nicht-Flachseite der in dem ersten und dem zweiten Werkzeugbauteil (50, 51) angeordneten ersten und zweiten Teilwickelmatte (1, 2) einander gegenüberliegend, derart, dass
- erste gebogene Wicklungsköpfe der ersten Teilwickelmatte (1) jeweils einem der zweiten gebogenen Wicklungsköpfe der zweiten Teilwickelmatte (2) gegenüberliegen und
- entlang der Längsrichtung eine versetzte Anordnung der gegenüberliegenden ersten und zweiten gebogenen Wicklungsköpfe gebildet ist, bei der der erste gebogene Wicklungskopf in Bezug auf den jeweils gegenüberliegenden zweiten gebogenen Wicklungskopf in einer ersten Querrichtung, welche auf jeweiligen Flachseiten der ersten und der zweiten Teilwickelmatte (1, 2) aufrechtstehend verläuft, abwechselnd höher oder tiefer angeordnet ist;
- Herstellen einer verwebten Wickelmatte (10) mittels Verweben der ersten und der zweiten Teilwickelmatte (1, 2), wobei hierbei das erste und das zweite Werkzeugbauteil (50, 51) aufeinander zugestellt und hierdurch die erste und die zweite Teilwickelmatte (1, 2) in einer zweiten Querrichtung, die quer zur Längsrichtung und zur ersten Querrichtung ausgebildet ist, ineinander geschoben werden, so dass die gegenüberliegenden ersten und zweiten gebogenen Wicklungsköpfe hierbei übereinanderliegend aneinander vorbeigeführt werden; und
- Trennen der verwebten Wickelmatte (10) von dem ersten und dem zweiten Werkzeugbauteil (50, 51).
